# EUROPÄISCHE PATENTANMELDUNG

(11) **EP 1 350 696 A1**
(43) Veröffentlichungstag der Anmeldung: **08.10.2003**
(21) Anmeldenummer: 03002439.2
(22) Anmeldetag: 05.02.2003
(51) Int. Cl.: B60R 22/195

(54) **Sicherheitsvorrichtung für einen Komfortsitz**

(30) Priorität: 04.03.2002 DE 10209235
(71) Anmelder: DaimlerChrysler AG, 70567 Stuttgart (DE)
(72) Erfinder: Edrich, Hans, 67716 Heltersberg (DE); Flory, Gerhard, 71032 Böblingen (DE); Franzmann, Günter, 67806 Rockenhausen (DE); Geisel, Thomas, 72108 Rottenburg (DE); Schrom, Ralf-Henning, 72108 Rottenburg (DE)

(57) **Zusammenfassung**

Um eine Sicherheitsvorrichtung für einen Komfortsitz (1) mit einer Sitzfläche (3) und einer Rückenlehne (2), die sich von einer Sitzposition in eine Ruheposition und umgekehrt überführen lassen, bereitzustellen, durch die die Sicherheit von auf dem Komfortsitz befindlichen Fahrzeuginsassen erhöht wird, wird vorgeschlagen, den Komfortsitz mit einem Sicherheitsgurtsystem (5) auszustatten, das ein Gurtband (11,12), welches im Bereich der Sitzfläche über einen Gurtendbeschlag (9) befestigt und auf einen im oberen Bereich der Rückenlehne angeordneten Gurtaufrollmechanismus bevorratet ist, umfasst, wobei auf der dem Gurtendbeschlag (9) gegenüberliegenden Seite der Sitzfläche ein Gurtschloss (13) vorgesehen ist, um das Gurtband über eine Gurtzunge gemäß einem Dreipunktgurtsystem anzulenken und wobei im Falle eines Unfalls das Gurtband über den Gurtaufrollmechanismus und ein am Gurtendbeschlag angreifendes Strammsystem (20) gestrafft wird.

## Beschreibung

Die Erfindung betrifft eine Sicherheitsvorrichtung für einen Komfortsitz gemäß dem Oberbegriff des Patentanspruchs 1.

Bei der Entwicklung von Sitzen, insbesondere von Fahrzeugsitzen, geht es unter anderem um die Erzielung eines möglichst hohen Sitzkomforts, weil die Insassen unter Umständen viele Stunden bei relativ geringer Bewegung auf dem Sitz verweilen. Daher ist es wünschenswert, wenn Fahrzeugsitze eine Möglichkeit für Fahrzeuginsassen bieten, sich auf diesen auszuruhen. Diese Möglichkeit stellen beispielsweise sogenannten Komfortsitze zur Verfügung. Solche Sitze umfassen eine Sitzfläche sowie eine Rückenlehne, die sich von einer Sitzposition in eine Ruheposition und umgekehrt überführen lassen. Die Sitzposition zeichnet sich durch eine im wesentlichen senkrechte Stellung der Rückenlehne - beispielsweise ca. 25° gegenüber einer Senkrechten - und einer entsprechend angepassten Stellung der Sitzfläche aus, so dass ein Fahrzeuginsasse eine aufrechte Haltung einnimmt. Bei einer Ruheposition hingegen wird die Rückenlehne relativ stark geneigt, so dass der Insasse eine dem Liegen ähnliche Ruhestellung einnimmt.

Insbesondere in der Ruheposition besteht bei einem Unfall das Problem, dass ein Fahrzeuginsasse trotz angelegtem Gurt nicht ausreichend zurückgehalten wird. Er kann aufgrund seiner dem Liegen ähnlichen Position unter den Gurtbändern hindurchtauchen. Man nennt dies den sogenannten Submarining-Effekt.

Aus dem Stand der Technik ist es zur Erhöhung der Insassensicherheit bekannt, ein Dreipunktgurtsystem für einen normalen Fahrzeugsitz mit mehreren Gurtstraffern zu versehen. Beispielhaft sei hier auf die DE 24 09 159 verwiesen, die ein Sicherheitssystem für einen Kraftfahrzeugsitz beschreibt, bei dem ein Dreipunktgurt mittels drei Servomotoren gestrafft wird. Die Motoren greifen am Gurtendbeschlag, am Gurtschloss und am Gurtaufrollmechanismus an und werden bei einem Unfall aktiviert, wodurch das Gurtband gestrafft wird. Durch dieses Straffen wird eine eventuell vorhandene Gurtlose entfernt, und somit der vom Sicherheitsgurt zugelassene Spielraum verringert, so dass ein Fahrzeuginsasse möglichst umgehend zurückgehalten wird.

Es ist Aufgabe der vorliegenden Erfindung eine Sicherheitsvorrichtung für einen Komfortsitz zu schaffen, welche die Sicherheit von Fahrzeuginsassen erhöht.

Diese Aufgabe wird durch eine Sicherheitsvorrichtung für einen Komfortsitz mit den Merkmalen des Patentanspruchs 1 gelöst.

Die Erfindung zeichnet sich dadurch aus, dass ein Sicherheitsgurtsystem bereitgestellt wird, welches speziell auf die Besonderheiten eines Komfortsitzes angepasst ist. Ein Komfortsitz mit einer Sitzfläche und einer Rückenlehne kann sowohl eine Sitzposition als auch eine Ruheposition einnehmen. Zwischen diesen Extrempositionen kann er auch alle Zwischenpositionen einnehmen. Ab einem bestimmten Neigungswinkel der Rückenlehne wird die Sitzfläche angehoben. Das Anheben kann über eine Sitzsteuerung oder über entsprechend geformte Führungsschiene erfolgen. Wie bereits ausgeführt, zeichnet sich die Sitzposition durch eine im wesentlichen senkrechte Stellung der Rückenlehne aus, während in einer Ruheposition die Rückenlehne eine stärker geneigte Stellung einnimmt.Um in all diesen möglichen Positionen, insbesondere den Positionen mit einer stärkeren Neigung der Rückenlehne, eine optimale Sicherheit für den Fahrzeuginsassen zu gewährleisten, ist ein Sicherheitsgurtsystem vorgesehen, welches ein Gurtband umfasst, dass mit seinem einen Ende im Bereich der Sitzfläche angelenkt ist und dessen anderes Ende in einem Gurtaufrollmechanismus bevorratet ist. Das Gurtband ist mitttels eines Gurtschlosses, welches auf der dem Anlenkpunkt des Gurtbandes gegenüberliegenden Seite der Sitzfläche angeordnet ist, und mit einer dem Gurtband zugeordneten Schlosszunge zusammenwirkt, als Dreipunktgurtsystem ausgelegt. Im Falle eines Unfalls wird das Gurtband erfindungsgemäß an zwei Punkten gestrafft. Ein Teil der Straffung erfolgt über den Gurtaufrollmechanismus. Darüber wird der über die Schulter des Insassens verlaufende Bereich des Gurtbandes gestrafft. Der andere Teil der Straffung erfolgt über den Gurtendbeschlag. Hierdurch wird effektiv der über das Becken des Insassens verlaufende Bereich des Gurtbandes gestrafft.

Die Straffung des Beckengurtes bewirkt, dass der Fahrzeuginsasse über den auf seine Beckenknochen wirkenden Beckengurt in den Sitz hinein gezogen wird, wodurch ein Durchtauchen unter dem Gurtband unterbunden wird. Die Straffung des Schultergurtes drückt den gesamten Oberkörper des Fahrzeuginsassens zusätzlich gegen die Rückenlehne, wodurch zum einen ein Vorschwenken des Oberkörpers und zum anderen auch ein Durchtauchen unter dem Gurtband vermieden wird. Die Kombination dieser beiden Straffungen führt zu einer Sicherheitsvorrichtung für Komfortsitze, die effektiv ist und damit die Sicherheit von Fahrzeuginsassen erheblich erhöht.

Vorteilhafte Ausführungsformen sind den Unteransprüchen zu entnehmen.

Der Gurtaufrollmechanismus kann in die Rückenlehne integriert sein. Ein solcher Integralsitz bringt mehrere Vorteile mit sich. Es ist zum einen möglich, den Komfortsitz irgendwo im Fahrzeug unabhängig von der Umgebung anzuordnen. Es ist nicht notwendig, den Sitz beispielsweise direkt neben einer B-Säule anzuordnen, die den Aufrollmechanismus aufnehmen könnte. Ein weiterer Vorteil ist darin zu sehen, dass unabhängig von der Position des Komfortsitzes und der Position der Rückenlehne, das Gurtband immer den gleichen Verlauf relativ zu dem auf dem Komfortsitz befindlichen Fahrzeuginsassen einnimmt.

Selbstverständlich kann der Gurtaufrollmechanismus auch unabhängig von Sitz angeordnet sein. Das bringt wiederum den Vorteil mit sich, dass die Dimensionen des Komfortsitzes nicht so ausgelegt werden müssen, dass sie einen Gurtaufrollmechanismus aufnehmen könne müssen. Dadurch wird Bauraum in dem Sitz gespart, der für andere Baueinheiten genutzt werden kann.

Die Straffung des Beckengurtes kann über ein am Endbeschlag angreifendes unter der Sitzfläche des Komfortsitzes angeordntes Strammsystem erfolgen. Die Anordnung des Strammsystems unter der Sitzfläche bietet sich an, weil dort Platz zur Verfügung steht, so dass das Strammsystem optisch unauffällig in das Fahrzeug integriert werden kann. Zudem ist der Gurtendbeschlag von dort gut zugänglich.

Wenn das Strammsystem unter der Sitzfläche zwischen zwei Sitzverstellschienen angeordnet und mit dem Komfortsitz verbunden ist, dann ist es möglich, den Sitz mit dem Strammsystem gemeinsam zu verschieben. Auf diese Weise ist sichergestellt, dass das Strammsystem immer dieselbe Position relativ zu dem Gurtendbeschlag, an dem sie angreift, einnimmt. Es sind also keine verstellbaren Verbindungselemente zwischen Strammsystem und Endbeschlag notwendig. Dadurch wird eine zuverlässige Funktionsweise der erfindungsgemäßen Sicherheitsvorrichtung gewährleistet.

Das Strammsystem kann beispielsweise eine pyrotechnische Auslöseeinheit aufweisen. Diese bringt den Vorteil mit sich, dass sie schnell ausgelöst werden kann, wodurch die Straffzeiten optimiert werden und wodurch die Sicherheit für Fahrzeuginsassen erheblich erhöht wird. Es ist jedoch auch denkbar andere übliche Auslöseeinheiten zu verwenden, wie beispielsweise einen Elektromotor.

Das Strammsystem kann einen Einführtrichter aufweisen, durch den das Gurtband in das Strammsystem geführt ist. Der Trichter stellt sicher, dass das Gurtband beim Straffen fehlerfrei in Richtung Strammsystem bewegt werden kann, so dass der Straffvorgang nicht beeinträchtigt wird und eine zuverlässige Straffung erfolgt.

Zwischen dem Gurtendbeschlag des Gurtbandes und der Auslöseeinheit kann ein Verbindungselement vorgesehen sein. Bevorzugt besteht dieses Verbindungselement aus einem Drahtseil. Ein solches Seil kann zuverlässig die Zugkräfte übertragen, die die Auslöseeinheit in das Verbindungselement einleitet. Es ist selbstverständlich auch jede andere Art von Verbindungselement denkbar, die diese Aufgabe zuverlässig erfüllt.

Das Strammsystem kann auch Dämpfungselemente aufweisen, die Geräuschbildung vermeiden. Ein solches Dämpfungselement kann beispielsweise aus einem Kunststoffclip bestehen, welcher sich relativ zueinander bewegende Teile auf Abstand hält oder gegeneinander presst und somit eine Geräuschbildung unterbindet. Es können aber auch andere Dämpfungselemente eingesetzt werden, die Geräusche dämpfen und zugleich einen störungsfreien Straffvorgang in dem Strammsystem sicherstellen.

Gemäß einer Ausführungsform ist das Straffsystem einstückig mit dem Gurtschloss ausgeführt. Diese Ausführungsform hat den Vorteil, dass sie komplett vormontiert werden kann, was sich positiv auf die Montagezeiten auswirkt. Des weiteren ist diese Ausführungsform besonders gut geeignet, die bei einem Crash auf das Gurtschloss und den Gurtendbeschlag einwirkenden Kräfte sicher aufzunehmen. Das Gurtschloss kann aber auch lösbar an dem Straffsystem befestigt, beispielsweise angeschraubt, sein. Es ist auch denkbar, dass Straffsystem und Gurtschloss unabhängig voneinander angeordnet sind.

Im folgenden wird die Erfindung anhand dem in den Zeichnungen dargestellten Ausführungsbeispiel näher erläutert. Dabei zeigen:
- Fig. 1: eine schematische Seitenansicht eines Komfortsitzes in einer Ruheposition mit einem erfindungsgemäßen Sicherheitsgurtsystem;
- Fig. 2: eine dreidimensionale Darstellung eines Strammsystems, wie es beim erfindungsgemäßen Sicherheitsgurtsystem zum Einsatz kommt und
- Fig. 3: eine Schnittdarstellung des Strammsystems gemäß der Linie III-III in Fig. 2.

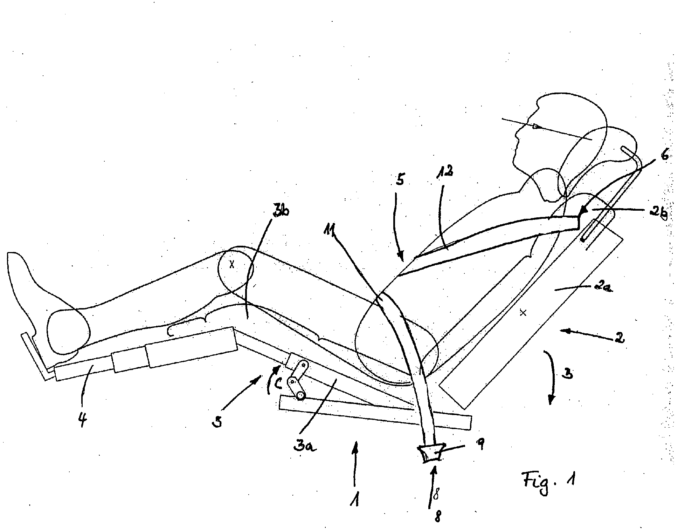

In Fig. 1 ist schematisch ein Komfortsitz 1 in einer Ruheposition mit einem Fahrzeuginsassen dargestellt. Der Komfortsitz 1 umfasst eine Rückenlehne 2 und eine Sitzfläche 3. An die Sitzfläche 3 schließt sich eine Fußstütze 4 an. Sowohl Rückenlehne 2, als auchSitzfläche 3 bestehen jeweils aus einem Rahmen 2a bzw. 3a als auch aus einem Polster 2b bzw. 3b.

Auf die einzelnen Bestandteile des Sitzes soll an dieser Stelle nicht näher eingegangen werden. Es soll lediglich die Ruheposition beschreiben werden. Diese zeichnet sich dadurch aus, dass die Rückenlehne 2 im Vergleich zur nicht dargestellten Sitzposition entsprechend dem Pfeil B geneigt ist. Sie nimmt in dieser Darstellung einen Neigungswinkel zur Horizontalen von ca. 45° ein. Die Sitzfläche 3 ist gemäß dem Pfeil C von einer Sitzposition in die Ruheposition verschwenkt. Die sich an die Sitzfläche 3 anschließende Fußstütze 4 führt ebenfalls eine Schwenkbewegung und gegebenenfalls eine Streckbewegung aus. Auf diese Weise ergibt sich für einen auf dem Komfortsitz befindlichen Fahrzeuginsassen die Möglichkeit, eine Ruhe-Liege-Position einzunehmen. Diese Möglichkeit ermöglicht es zu entspannen, wodurch der Reisekomfort erheblich erhöht wird.

Im folgenden wird nun die erfindungsgemäße Sicherheitsvorrichtung des Komfortsitzes näher erläutert. In Fig. 1 ist ein Sicherheitsgurtsystem 5 dargestellt. Dieses weist ein Gurtband auf, das an drei Punkten 6 angelenkt ist, von denen ein Punkt aus der Sicht des Betrachters hinter dem Sitz angeordnet und daher nicht dargestellt ist. Ein Punkt 6 befindet sich am oberen Ende der Rückenlehne 2. In der Rückenlehne ist ein ebenfalls nicht dargestellter Gurtaufrollmechanismus angeordnet, welcher das Gurtband bevorratet. Ein weiterer Punkt 8 befindet sich unterhalb der Sitzfläche 3 in dem Bereich, an dem Sitzfläche 3 und Rückenlehne 2 aneinander stoßen. An dem Punkt 8 ist das Gurtband über einen Gurtehdbeschlag 9 befestigt. Der nicht dargestellte dritte Punkt wird durch ein Gurtschloss gebildet. Das Gurtband ist über eine Gurtzunge mit dem Gurtschloss verbunden. Der dritte Punkt unterteilt das Gurtband in zwei Bereiche: einen Beckengurt 11, der sich von dem Gurtendbeschlag 9 bis zum Gurtschloss, und einen Schultergurt 12, der sich von dem Gurtschloss zum Gurtaufrollmechanismus 6 erstreckt.

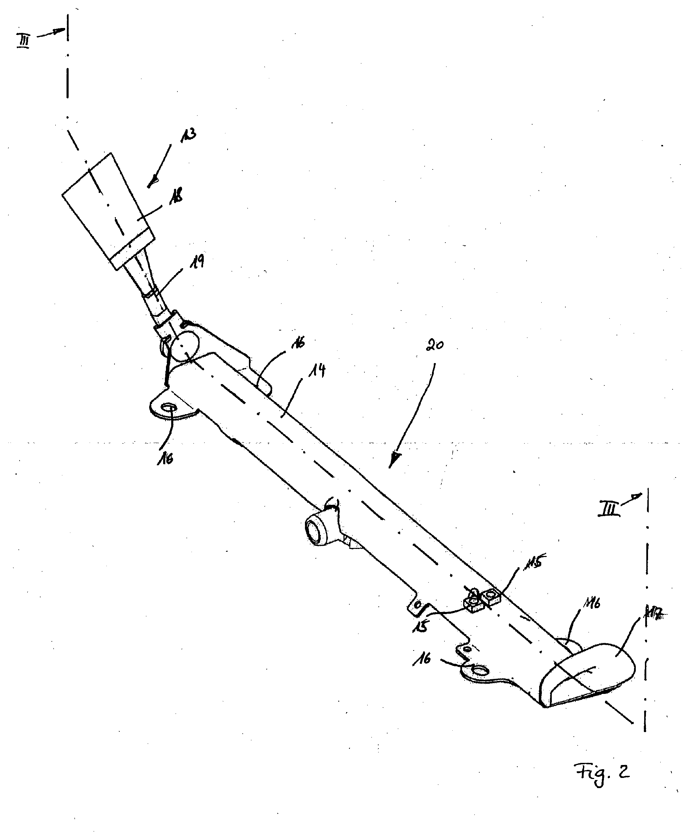

Der Gurtendbeschlag 9 ist in ein in Fig. 2 dargestelltes Strammsystem 20 integriert. Das Strammsystem 20 ist unterhalb des Sitzfläche 3 angeordnet und zwar zwischen dem Punkt 8 und dem Gurtschloss 13. In Fig. 2 ist das Strammsystem 20 von außen dargestellt und eine Verkleidung 14 sichtbar. Die Verkleidung 14 ist mit mehreren Befestigungseinrichtungen versehen, wie beispielsweise Muttern 15 und Ausnehmungen 16. Über diese kann das Strammsystem 20 festgelegt werden. Weiterhin ist in Fig. 2 ein Einführtrichter 17 zu erkennen. Durch den Einführtrichter 17 ist das Gurtband in das Innere des Strammsystems 20 bis zum Gurtendbeschlag 9 geführt. Die Funktion des Einführtrichters 17 wird später im Zusammenhang mit der Funktion des gesamten Strammsystems 20 erläutert.

Auf der dem Einführtrichter 17 gegenüberliegenden Seite des Strammsystems 20 ist das Gurtschloss 13 angeordnet. Es weist ein Aufnahmeelement 18 zur Aufnahme der Gurtzunge sowie ein Verbindungselement 19 zur Verbindung des Schlosses 13 mit dem Strammsystem 20 auf.

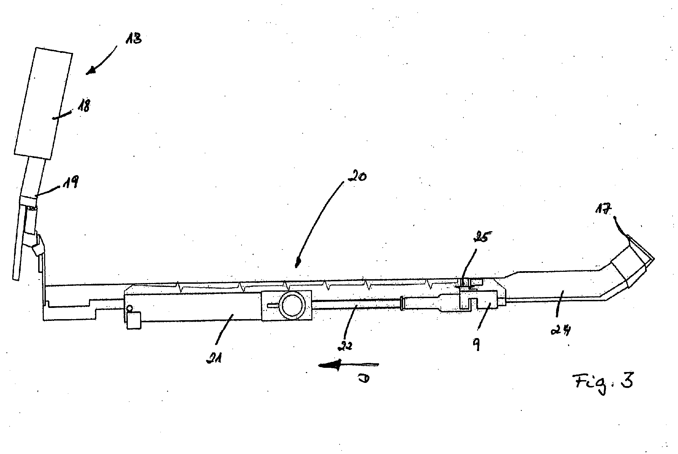

Die einzelnen Bestandteile des Strammsystems 20 sind in Fig. 3 dargestellt. Auf der linken Seite befindet sich eine pyrotechnische Auslöseeinheit 21. Die Auslöseeinheit 21 wirkt auf ein Verbindungselement 22, welches beispielsweise ein Stahlseil sein kann, ein. Das Verbindungselement 22 wiederum wirkt auf den Endbeschlag 9, der mit dem Gurtband, nämlich dem Gurtband des Beckengurtes 11 verbunden ist. In dem Strammsystem 12 verläuft das Gurtband bis zum Endbeschlag 9 in einer Führung 24.

Um eine Geräuschbildung zu unterbinden ist in dem Strammsystem 20 ein Dämpfungselement 25 vorgesehen. Dieses Dämpfungselement 25 hält die sich gegeneinander bewegenden Teile entweder auf Abstand oder presst sie zusammen. Auf diese Weise ist zwischen diesen Teile keine, Geräusche erzeugende Bewegung mehr möglich, wodurch die Geräusche unterbunden werden. Das Dämpfungselement 25 kann beispielsweise aus Kunststoff besteht und die Form eine Clips aufweisen.

Wird nun ein Unfall oder eine gefährliche Fahrsituation detektiert, so wird die pyrotechnische Auslöseeinheit 21 aktiviert, wodurch das Verbindungselement 22 innerhalb weniger Millisekunden in Richtung des Pfeils D bewegt wird. Sobald das Verbindungselement 22 eine Endposition eingenommen hat, wird es über geeignete, nicht dargestellte Arretierungsmittel festgehalten. Mit dem Verbindungselement 22 wird auch der Gurtendbeschlag 9 in Richtung des Pfeils D bewegt. Dadurch wird wiederum das Gurtband durch den Einführtrichter 17 in das Strammsystem 20 gezogen.

Diese Gurtstraffung bewirkt zunächst einmal, dass eine eventuell im Beckengurt vorhandene Gurtlose entfernt wird. Bei einer weiteren Straffung wird der Fahrzeuginsasse in den Komfortsitz 1 gezogen. Dadurch wird vermieden, dass der Insasse unter dem Beckengurt hindurchrutschen kann.

Bei dem dargestellten Ausführungsbeispiel sind für den Verschiebeweg 100 mm vorgesehen. Je nach Bauraum und Ausführung des Strammsystems 20 sind auch beliege andere Längen von Verschiebwegen möglich.

Kombiniert mit der zusätzlichen Straffung des Schultergurtes 12 über einen bei 6 angeordneten Gurtaufrollmechanismus wird eine Sicherheitsvorrichtung zur Verfügung gestellt, die im Falle eines Unfalls eine zuverlässige Rückhaltewirkung erzielt, wodurch die Sicherheit für jegliche Positionen, insbesondere Ruhepositionen, der auf einem Komfortsitz befindlichen Fahrzeuginsassen erheblich erhöht wird.

## Patentansprüche

1. Sicherheitsvorrichtung für einen Komfortsitz (1) mit
- einer Sitzfläche (3) und einer Rückenlehne (2), die sich von einer Sitzposition in eine Ruheposition und umgekehrt überführen lassen, sowie
- - einem Sicherheitsgurtsystem (5) umfassend ein Gurtband, welches im Bereich der Sitzfläche über einen Gurtendbeschlag (9) befestigt und auf einen im oberen Bereich der Rückenlehne angeordneten Gurtaufrollmechanismus bevorratet ist, wobei auf der dem Gurtendbeschlag gegenüberliegenden Seite der Sitzfläche ein Gurtschloss (13) vorgesehen ist, um das Gurtband über eine Gurtzunge gemäß einem Dreipunktgurtsystem anzulenken,
die im Falle eines Unfalls das Gurtband über den Gurtaufrollmechanismus und ein am Gurtendbeschlag angreifendes Strammsystem (20) strafft.

2. Sicherheitsvorrichtung nach Anspruch 1,
**dadurch gekennzeichnet,**
**dass** der Gurtaufrollmechanismus in der Rückenlehne (2) angeordnet ist.

3. Sicherheitsvorrichtung nach Anspruch 1,
**dadurch gekennzeichnet,**
**dass** der Gurtaufrollmechanismus unabhängig vom Komfortsitz (1) angeordnet ist.

4. Sicherheitsvorrichtung nach einem der vorhergehenden Ansprüche,
**dadurch gekennzeichnet,**
**dass** die Straffung am Endbeschlag (9) über ein unter der Sitzfläche (3) des Komfortsitzes (1) angeordnetes Strammsystem (20) erfolgt.

5. Sicherheitsvorrichtung nach einem der vorhergehenden Ansprüche,
**dadurch gekennzeichnet,**
**dass** das Strammsystem (20) zwischen zwei unter der Sitzfläche (3) vorgesehenen Sitzverstellschienen angeordnet ist.

6. Sicherheitsvorrichtung nach einem der vorhergehenden Ansprüche,
**dadurch gekennzeichnet,**
**dass** das Strammsystem (20) eine pyrotechnische Auslöseeinheit (21) aufweist.

7. Sicherheitsvorrichtung nach einem der vorhergehenden Ansprüche,
**dadurch gekennzeichnet,**
**dass** das Strammsystem (20) einen Einführtrichter (17) aufweist.

8. Sicherheitsvorrichtung nach einem der vorhergehenden Ansprüche,
**dadurch gekennzeichnet,**
**dass** das Strammsystem (20) ein Verbindungselement (22) zwischen Auslöseeinheit (21) und Gurtband aufweist.

9. Sicherheitsvorrichtung nach einem der vorhergehenden Ansprüche,
**dadurch gekennzeichnet,**
**dass** das Strammsystem (20) mindestens ein Dämpfungselement (25) aufweist.

10. Sicherheitsvorrichtung nach einem der vorhergehenden Ansprüche,
**dadurch gekennzeichnet,**
**dass** das am Gurtendbeschlag (9) angreifende Strammsystem (20) einstückig mit dem Gurtschloss (13) ausgeführt ist.
